# FASCICULE DE BREVET EUROPEEN

(11) **EP 0 745 196 B1**
(45) Date de publication et mention de la délivrance du brevet: **28.07.1999**
(21) Numéro de dépôt: 95942252.8
(22) Date de dépôt: 13.12.1995
(51) Int. Cl.: F16F 15/139, F16F 15/134

(54) **VOLANT AMORTISSEUR, NOTAMMENT POUR VEHICULES AUTOMOBILES**
DREHSCHWINGUNGSTILGER, INSBESONDERE FÜR KRAFTFAHRZEUGE
FLYWHEEL, PARTICULARLY FOR MOTOR VEHICLES

(30) Priorité: 16.12.1994 FR 9415367
(43) Date de publication de la demande: 04.12.1996
(73) Titulaire: VALEO, 75017 Paris (FR)
(72) Inventeur: MOKDAD, Ayman, F-93400 Saint-Ouen (FR)
(74) Mandataire: Gamonal, Didier
(86) Numéro de dépôt international: FR9501654
(87) Numéro de publication internationale: WO9618832

(56) Documents cités:
- DE-A- 3 622 630
- DE-A- 3 712 876
- DE-A- 3 926 384
- FR-A- 2 658 880
- FR-A- 2 690 722
- FR-A- 2 718 814

## Description

La présente invention concerne les volants amortisseurs, notamment pour véhicules automobiles, comportant deux masses coaxiales montées mobiles l'une par rapport à l'autre à l'encontre, d'une part, des moyens élastiques comportant au moins un organe élastique intervenant globalement radialement entre lesdites masses et monté à articulation sur l'une et l'autre de celles-ci et, d'autre part des moyens de frottement à action axiale.

Un tel volant est décrit par exemple dans le document FR-A-2 718 814 déposé le 14 Avril 1994 correspondant à la demande WO-A-95/28578 constituant un état de la technique conforme à la règle 54(3) (4) de la CBE.

Dans ce document (figure 1) l'une 1 des masses (la première) est calée en rotation sur le vilebrequin 20 du moteur du véhicule, tandis que l'autre masse 2 constitue le plateau de réaction d'un embrayage à friction.

Les moyens élastiques sont montés à articulation, d'une part, sur la première masse à l'aide de premiers moyens d'articulation et, d'autre part, sur la seconde masse à l'aide de seconds moyens d'articulation.

Les moyens de frottement sont implantés radialement au-dessus des seconds moyens d'articulation.

Le plateau de réaction 2 est creusé en 101 pour logement des moyens de frottement 4 portés par une pièce en tôle 100 solidaire de la première masse et définissant avec celle-ci une chape pour le montage à articulation des moyens élastiques 3. La masse 2 offre une face de friction pour le disque de friction 30 de l'embrayage.

Cette masse 2 est bombée en 102 au niveau de sa creusure 101 pour montage à sa périphérie interne d'axes d'articulation des moyens élastiques 3. Il en résulte que la masse 2 a une forme compliquée d'autant plus qu'elle est dotée de perçages pour le montage de pions 103 d'entraînement appartenant aux moyens de frottement 4. Le disque de friction 30 a une forme tortueuse à sa périphérie interne pour pouvoir contourner la partie bombée 102 de la masse 2.

En outre les moyens de frottement sont relativement bruyants puisqu'ils sont portés par une pièce 100 en tôle épaisse. De plus, ces moyens de frottement sont sensibles à la température de la masse 2 qui peut s'échauffer notablement puisqu'elle constitue le plateau de réaction de l'embrayage à friction.

La présente invention a pour objet de pallier ces inconvénients et donc de simplifier la deuxième masse tout en atténuant les bruits et en protégeant mieux thermiquement les moyens de frottement.

L'invention selon la revendication 1 se distingue d'un volant amortisseur du type connu de WO-A-95/28578 par le fait que les moyens de frottement sont implantés axialement entre ladite première masse et lesdits moyens élastiques.

Grâce à l'invention les moyens de frottement sont mieux protégés thermiquement puisqu'ils sont plus éloignés de la seconde masse pouvant atteindre des températures beaucoup plus élevées que la première masse.

Avantageusement la rondelle de frottement est entraînée par les seconds moyens d'articulation ou une pièce attelée aux seconds moyens d'articulation par exemple une douille entourant les seconds moyens d'articulation.

La seconde masse est simplifiée et rigidifiée puisqu'elle est dépourvue de creusure et de partie bombée.

En outre le disque de friction est simplifié puisqu'il n'est pas nécessaire de prévoir de forme tortueuse à sa périphérie interne du fait que la seconde masse est dépourvue de partie bombée.

On peut augmenter le diamètre d'emmanchement des axes portés par la seconde masse pour le montage à articulation des moyens élastiques. Ceci est rendu possible du fait de l'absence de creusure. On obtient ainsi un meilleur emmanchement des axes.

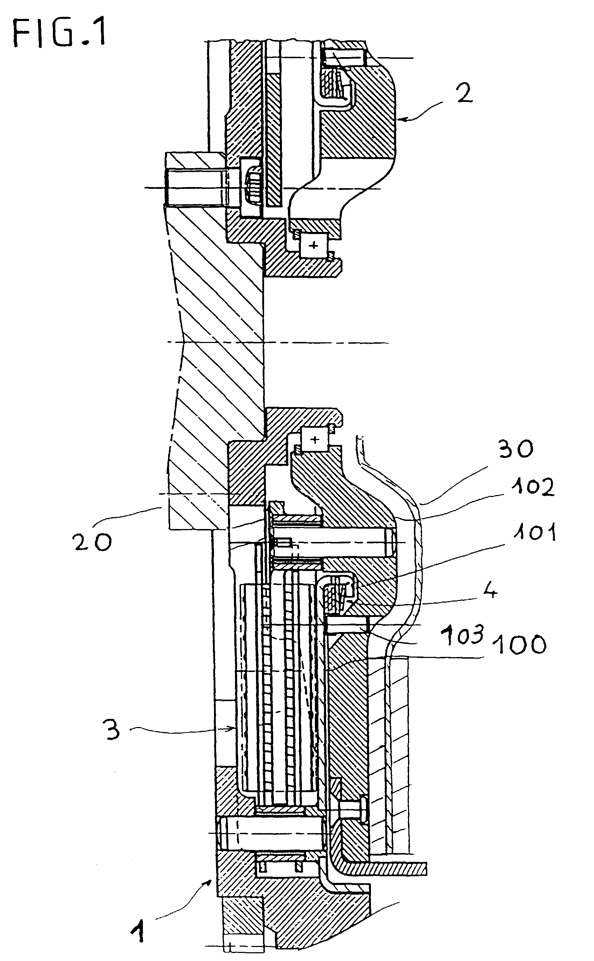

De plus les bruits sont atténués puisque la première masse est plus massive que la pièce 100 de la figure 1. Cette pièce est donc simplifiée et sert principalement au montage des axes d'articulation des moyens élastiques.

Ceci est favorable à la réduction de l'encombrement axial du volant amortisseur, les moyens élastiques pouvant venir au plus près de la seconde masse. Ceci permet également d'augmenter l'épaisseur de la première masse. Celle-ci peut avoir donc une épaisseur plus grande à sa périphérie externe qu'à sa périphérie interne ce qui est favorable pour l'augmentation de l'inertie du volant amortisseur.

En outre on tire avantageusement parti de cette variation d'épaisseur pour implanter les moyens de frottement comportant au moins une rondelle de frottement serrée axialement entre la première masse et une rondelle d'application calée en rotation sur la première masse et soumise à l'action d'une rondelle élastique à action axiale prenant appui sur un épaulement solidaire de la première masse.

La rondelle d'application présente par exemple à sa périphérie externe des pattes engagées dans des rainures formées dans la première masse à la faveur de la variation d'épaisseur de celle-ci.

Ces rainures sont obtenues aisément par moulage.

La rondelle de frottement présente par exemple à sa périphérie interne une zone plus épaisse dans laquelle sont pratiqués des évidements adaptés avantageusement à recevoir chacun une prolongation de l'axe d'articulation des moyens élastiques porté par la deuxième masse.

Ainsi les moyens de frottement s'étendent en majeure partie radialement au-delà desdits axes d'articulation qui assurent ainsi une double fonction. On réduit ainsi le nombre de pièces en éliminant les pions 103.

La description qui va suivre illustre l'invention en regard des dessins annexés dans lesquels :
- la figure 1 est une vue partielle en coupe d'un volant amortisseur selon l'art antérieur ;
- la figure 2 est une vue en coupe axiale d'un volant amortisseur selon l'invention ;
- la figure 3 est une vue partielle à plus grande échelle de la figure 2 ;
- la figure 4 est une vue en perspective montrant partiellement une cassette appartenant aux moyens élastiques du volant amortisseur.

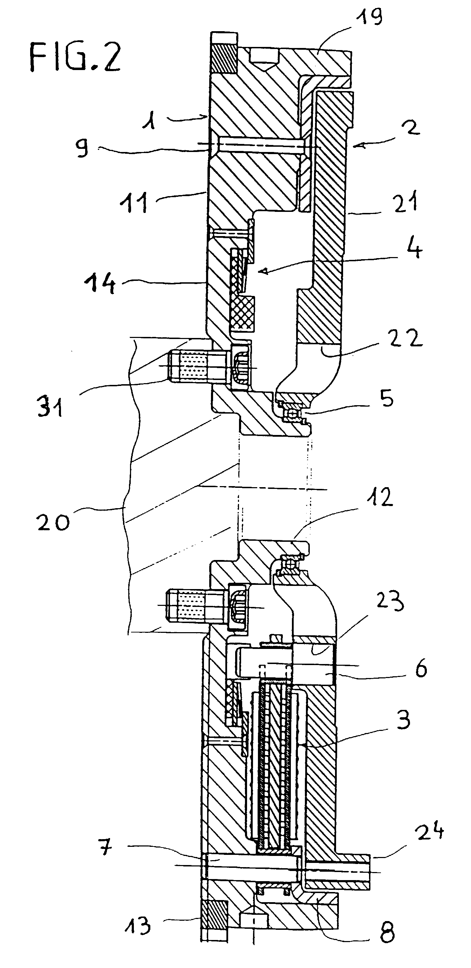

Dans les figures 2 à 4 les références communes à l'art antérieur et à l'invention seront affectées des mêmes signes de référence.

Ainsi dans ces figures 2 à 4, est illustré un volant amortisseur, dénommé usuellement double volant amortisseur, pour véhicules automobiles.

Ce volant amortisseur comporte deux parties coaxiales 1,2 montées mobiles l'une par rapport à l'autre à l'encontre de moyens élastiques 3 globalement à action radiale. Les parties 1,2 consistent ici en des masses.

La première partie 1 est destinée à être calée en rotation sur un arbre menant, ici sur le vilebrequin 20 du moteur à combustion interne du véhicule.

La deuxième masse 2 est destinée à être calée en rotation sur un arbre mené, ici l'arbre d'entrée de la boîte de vitesses (non visible) du véhicule automobile.

Cette seconde masse 2 est montée tourillonnante sur un moyeu tubulaire 12 porté par la première masse 1.

La première masse 1 est ici en- matière moulable avantageusement en fonte pour augmenter l'inertie du volant amortisseur.

En variante elle peut être à base d'aluminium, le choix de la matière dépendant des applications.

Cette première masse 1 comporte un plateau 11 portant à sa périphérie externe une couronne de démarreur 13 propre à être entraînée par le démarreur du véhicule.

Ce plateau 11 est doté à sa périphérie externe d'un rebord cylindrique 19 d'orientation axiale. Le plateau 11 est plus massif à sa périphérie externe et comporte à sa périphérie interne une portion interne 14 d'épaisseur réduite en forme de flasque.

Ici le moyeu 12 est d'un seul tenant avec cette portion interne 14 et constitue ainsi la partie centrale de la première masse 1. En variante le moyeu 12 peut être rapporté sur le flasque 14.

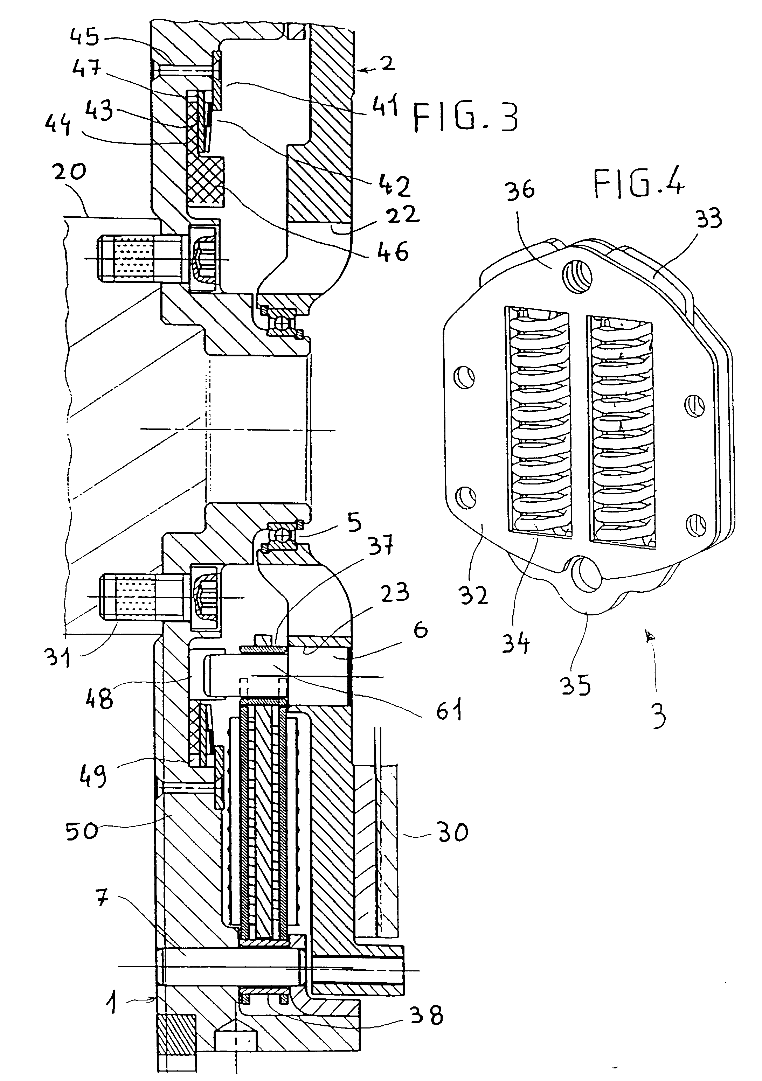

La seconde masse 2 est montée tournante sur la masse 1 par l'intermédiaire d'un palier 5 et constitue le plateau de réaction d'un embrayage à friction comportant de manière connue en soi, un disque de friction 30 représenté partiellement à la figure 3, un plateau de pression, un diaphragme et un couvercle non visibles.

Le diaphragme, de manière connue en soi, prend appui sur le couvercle, adapté à être rapporté ici sur un rebord périphérique cylindrique d'orientation axiale 24 que présente la masse 2 à sa périphérie externe, pour action sur le plateau de pression et serrage des garnitures de frottement du disque de friction 30 entre ledit plateau de pression et la masse 2 présentant à cet effet une face de friction 21 pour le disque de friction 30. Ce disque 30 est doté à sa périphérie interne d'un moyeu non visible calé en rotation sur l'arbre d'entrée de la boîte de vitesses.

Le diaphragme de l'embrayage est adapté à être actionné, de manière connue en soi, par une butée de débrayage (non visible).

Normalement l'embrayage est engagé et le disque de friction 30 est serré entre la masse 2 et le plateau de pression de l'embrayage.

Pour désengager l'embrayage il suffit d'agir à l'aide de la butée de débrayage pour faire pivoter celui-ci.

La deuxième masse 2 est donc calée en rotation de manière débrayable sur l'arbre mené par l'intermédiaire de l'embrayage à friction et est ici en fonte.

Ici le palier 5 consiste en un roulement à billes de taille réduite. En variante il peut s'agir d'un palier lisse. Le roulement 5 est interposé radialement entre le moyeu 12 de la masse 1 et la périphérie interne (l'alésage interne) de la deuxième masse 2.

Le moyeu 12 est épaulé, ainsi que l'alésage interne de la deuxième masse 2.

Le calage axial du roulement 5 est réalisé grâce auxdits épaulements et à des circlips (non référencés) engagés dans des gorges pratiquées dans le moyeu 12 et dans la masse 2. Ce roulement 5 s'étend radialement en dessous des passages 22 (des trous) prévus dans la deuxième masse 2 pour passage des outils de vissage des vis 31, ici à tête creuse, de fixation du volant amortisseur sur le vilebrequin 20. Les passages sont donc en coïncidence avec les trous pratiqués dans la portion interne 14 pour le passage des vis 31.

Les deux masses 1,2 sont montées mobiles l'une par rapport à l'autre à l'encontre, d'une part, de moyens élastiques 3 comportant au moins un organe élastique 34 intervenant globalement radialement entre lesdites masses et monté à articulation sur l'une et l'autre de celles-ci, et, d'autre part, de moyens de frottement à action axiale 4.

Ici les moyens élastiques 3 sont montés à la périphérie interne de la seconde masse 2 à l'aide de seconds moyens d'articulation 6 et à la périphérie externe de la première masse 1 à l'aide de premiers moyens d'articulation 7. Les moyens de frottement 4 sont implantés radialement en majeure partie au-dessus des seconds moyens d'articulation 6.

Ici plusieurs organes élastiques 34 sont prévus et ceux-ci sont montés dans au moins une cassette articulée comportant, d'une part, un voile 33 doté de premiers logements pour montage des organes élastiques 34, ici en forme de ressorts à boudin, et, d'autre part, deux pièces de guidage 32 disposées de part et d'autre dudit voile 33 et présentant chacune, en regard des premiers logements, un second logement pour montage desdits organes élastiques 34.

C'est donc par l'intermédiaire des cassettes que les ressorts 34 sont montés à articulation sur l'une et l'autre des masses 1,2.

Ici deux organes élastiques 34 sont prévus par cassette, lesdits organes élastiques 34 s'étendant parallèlement l'un à l'autre dans la cassette. Les premier et les second logements consistent ici en des fenêtres comme mieux visible à la figure 4.

Les pièces de guidage 32 sont fixées latéralement l'une à l'autre ici par rivetage à l'aide de colonnettes formant entretoise entre les deux pièces 32. En variante les pièces 32 sont fixées l'une à l'autre latéralement à l'aide de bords latéraux soudés entre eux.

Par simplicité les colonnettes n'ont pas été représentées à la figure 4 et seuls sont visibles les trous (non référencés) pratiqués dans les pièces 32 pour passage des têtes des colonnettes écrasées pour la fixation des pièces 32.

Le voile 33 et les pièces de guidage 32 sont montés tête-bêche, le voile 33 présentant à sa périphérie interne une protubérance 35 pour montage de premiers moyens d'articulation 6 sur la deuxième masse 2, tandis que les pièces de guidage 32 présentent à leur périphérie externe chacune une protubérance 36 en regard l'une de l'autre pour montage de seconds moyens d'articulation 7 sur la première masse 1.

Le voile 33 est évidé à ce niveau pour passage de l'axe 7 (figure 4).

Les protubérances 35 et 36 sont décalées radialement l'une par rapport à l'autre et il en est de même des moyens d'articulation 6 et 7, qui ici sont radialement alignés. En variante un léger décalage circonférentiel peut exister. Les moyens élastiques 3 sont donc globalement à action radiale.

Ici les moyens d'articulation 6 et 7 consistent en des axes. Les axes 7, constituant les premiers moyens d'articulation, sont implantés à la périphérie externe de la masse 1, tandis que les axes 6, constituant les seconds moyens d'articulation, sont implantés à la périphérie interne de la masse 2, ici radialement au-dessus des passages 22 des vis de fixation 31, au voisinage desdits passages.

Ici les protubérances 35 et 36 sont trouées chacune pour montage de manchons (ou tubes) respectivement 37,38 enfilés dans lesdits trous. Le manchon 37 est solidaire par exemple par soudage ou collage de la protubérance 35, tandis que le manchon 38 est solidaire, par exemple par collage ou soudage, des pièces de guidage 32.

Un revêtement est prévu dans l'alésage interne de chaque manchon 37,38 et forme ainsi un palier respectivement pour l'axe 6 et l'axe 7.

L'axe 7 est emmanché à force dans la masse 1 à la périphérie externe de celle-ci et s'étend axialement en direction de la deuxième masse 2. Son extrémité libre est emmanchée dans une pièce 8 fixée à l'aide de rivets 9 sur le plateau 11 de la masse 1. La pièce 8 rigidifie la masse 1 en étant adjacente à la masse 2.

Le manchon 38 est interposé axialement entre le plateau 11 et cette pièce 8. Il est formé ainsi une chape pour le montage de l'axe 7, qui est ainsi bien soutenu. On réalise également un calage axial de la cassette. Des moyens de frottement 4 à action axiale interviennent également entre les deux masses. Ces moyens de frottement comportent usuellement au moins une rondelle de frottement 44.

Suivant l'invention ces moyens de frottement 4 sont portés en majeure partie par la première masse 1 en étant implantés axialement entre la première masse 1 et les moyens élastiques 3. Plus précisément selon l'invention les moyens de frottement 4 présentent au moins une rondelle de frottement 44 d'une part, propre à être entraînée en rotation, éventuellement après rattrapage d'un jeu, par la deuxième masse, et d'autre part, intercalée entre deux faces de frottement appartenant à la première masse 1. Ces moyens de frottement 4 s'étendent au-dessus des vis de fixation 31, un jeu axial existant entre les pièces de guidage 32 et les moyens de frottement 4.

Ici la portion interne 14 du plateau 11 offre une face de friction, tournée vers la masse 2, à une rondelle de frottement 44, ici en matière synthétique renforcée par des fibres. Cette rondelle de frottement 44 présente à sa périphérie interne une protubérance 46 dirigée axialement vers la masse 2 pour définir une surépaisseur obtenue ici par moulage. La rondelle 44 est soumise à l'action d'une rondelle d'application 43 sur laquelle agit un moyen élastique à action axiale 42 prenant appui sur un épaulement 41 solidaire de la masse 1. Cet épaulement 41 peut consister en un circlips monté dans une gorge de la masse 1. Ici l'épaulement 41 consiste en une rondelle fixée à l'aide de rivets 45 sur la masse 1. Il est formé ainsi une boucle d'action et de réaction au sein de la première masse 1, un jeu axial existant entre l'épaulement 41, tourné vers la portion 14, et les moyens élastiques 3.

Plus précisément le dispositif de frottement 4 est implanté à la faveur du changement d'épaisseur précité du plateau 11.

Ce changement d'épaisseur définit axialement une surépaisseur 50 dans l'alésage interne de laquelle, au niveau de la zone d'enracinement de la surépaisseur 50 à la portion 14, sont réalisées ici par moulage des rainures 49 fermées par la rondelle 41 et par la portion interne 14. Dans ces rainures 49 s'engagent de manière complémentaire des pattes 47 ménagées à la périphérie externe de la rondelle d'application 43. Ainsi la rondelle 43 est calée en rotation avec mobilité axiale par rapport à la masse 1 et ce par une liaison du type tenon-mortaise.

Bien entendu il est possible d'inverser les structures. La rondelle d'application 43 présentant alors à sa périphérie externe des rainures dans lesquelles s'engagent des cannelures réalisées dans l'alésage interne de la surépaisseur 50. Ainsi la rondelle 41 bouche les rainures 49 ou masque les cannelures.

La surépaisseur 46 de la rondelle 44 est dotée d'évidements en forme d'encoches 48 dans lesquelles s'engagent les axes 6. La rondelle 44 est ainsi centrée par les axes 6. Ici les axes 6 ont une zone d'emmanchement dans les trous 23 de la masse 2 de plus grande taille que leur extrémité libre servant d'axe d'articulation aux douilles 37.

Cette extrémité 61 de diamètre réduit est prolongée axialement en direction de la portion interne 14 pour pénétrer dans les évidements 48 et ce à jeu de montage. En variante l'extrémité 61 s'engage à jeu circonférentiel dans les évidements.

D'une manière générale la rondelle 44 engrène, éventuellement à jeu, avec l'extrémité 61.

Ici les moyens élastiques 3 comportent quatre cassettes réparties régulièrement circulairement et donc quatre axes 7 et quatre axes 6. Bien entendu cela dépend des applications. Dans la position de repos les cassettes s'étendent radialement.

Ainsi les cassettes s'inclinent lors du mouvement relatif entre les deux masses 1,2, les ressorts 34 sont comprimés et la rondelle de frottement 44 est entraînée en rotation par l'extrémité 61 des axes 6. Les moyens élastiques 3 sont ainsi globalement à action radiale. Cette rondelle 44 étant serrée entre la rondelle d'application 43 et la portion interne 14 du plateau 11, il se produit un mouvement relatif et un frottement taré par le ressort 42 entre la rondelle 44 et les faces concernées de la rondelle d'application 43 et de la portion interne 14 solidaire de la première masse.

On notera que les pièces de guidage 32 s'étendent radialement en dessous de la pièce 8 dénommée usuellement pièce de fermeture.

Plus précisément cette pièce 8 est évidée au niveau des cassettes en sorte que les moyens élastiques 3 viennent au plus près de la masse 2, les pièces de guidage 32 étant implantées radialement entre la pièce 8 et une protubérance axiale de la masse 2 tournée vers la première masse et servant au montage des axes 6.

On appréciera que la rondelle de frottement 44 est très éloignée de la masse 2 en sorte qu'elle est peu sensible à la température atteinte par celle-ci, qui peut être très élevée notamment lors de plusieurs démarrages du véhicule en côte du fait que la masse 2 constitue le plateau de réaction de l'embrayage. Les moyens de frottement 4 sont donc protégés thermiquement, la rondelle 44 ne risque donc pas de fondre.

On notera que la masse 2 a ici une forme globalement plate par rapport à la masse 2 de l'art antérieur (figure 1). Cette masse 2 (figure 2) est dépourvue de partie bombée et de creusure en sorte qu'elle est plus rigide. Ceci permet d'augmenter la taille des zones d'emmanchement des axes 6 implantés au-dessus des ouvertures 22 au voisinage de celles-ci. Les axes 6 sont ainsi adjacents aux trous 22 de passage des outils précités.

Bien entendu la présente invention n'est pas limitée à l'exemple de réalisation décrit. En particulier, la première masse 1 peut être en plusieurs parties et présenter un flasque de même épaisseur que la portion interne 14 de la figure 2, une couronne intermédiaire portant la couronne de démarreur et la pièce 8. On peut alors utiliser les rivets 9 pour fixer entre elles ces diverses pièces.

Les moyens de frottement 4 peuvent présenter deux rondelles de frottement et deux rondelles d'application, l'une des rondelles de frottement étant intercalée entre la portion 14 et une première rondelle d'application, tandis que la deuxième rondelle de frottement est calée axialement entre les deux rondelles d'application, dont l'une est soumise aux moyens élastiques à action axiale 42. Ces moyens 42 peuvent consister en un diaphragme comme dans les figures 2 et 3, en variante en une rondelle Belleville ou en une rondelle élastique ondulée.

Dans le cas de deux rondelles de frottement des jeux circonférentiels peuvent être prévus entre les évidements de celles-ci et les axes 6. Ces jeux peuvent être différents d'une rondelle à l'autre en sorte que les rondelles interviennent de manière étagée.

On appréciera que le dispositif de frottement 4 est implanté à la périphérie interne des moyens élastiques 3 et ce radialement en majeure partie au-dessus des axes 6 (des seconds moyens d'articulation 6).

La rondelle de frottement 44 peut être entraînée, éventuellement après rattrapage d'un jeu, par les manchons 37 pénétrant dans les évidements 48. Dans ce cas les manchons 37 sont rallongés. Ces manchons 37 sont entraînés par les seconds moyens d'articulation 6 et donc la seconde masse 2.

Ainsi selon l'invention les moyens de frottement comportent une rondelle de frottement propre à être entraînée, avec ou sans jeu circonférentiel, par la seconde masse, plus précisément par les seconds moyens d'articulation.

On peut inverser les structures. Ainsi le voile 33 peut présenter à sa périphérie externe une protubérance pour montage sur l'axe 7, tandis que les pièces de guidage 32 présentent à leur périphérie interne chacune une protubérance pour montage sur l'axe 6. Les moyens élastiques 3 peuvent consister en une pluralité de ressorts à boudin, chaque extrémité du ressort à boudin étant dotée d'une boucle pour montage respectivement sur l'axe 6 et 7. Toutes les dispositions décrites dans le document FR93 15581 déposé le 23 Décembre 1993 sont envisageables.

Ainsi un seul organe peut être prévu par cassette qui peut comporter deux éléments en relation de cylindre piston, avec interposition de l'organe élastique travaillant en compression comme dans le document WO94/27062.

On peut remplacer les axes 6 et 7 par des tourillons venus de moulage respectivement de la masse 2 et de la masse 1, en sorte que les moyens d'articulation 6,7 ne sont pas forcément des axes.

De même on peut prévoir des paliers à aiguilles entre les manchons 37,38 et les axes 6,7.

De même on peut revêtir la face de la portion 14, formant face de frottement pour la rondelle 44, en un matériau de frottement à coefficient de frottement approprié. Dans tous les cas cette face de frottement est tournée vers la seconde masse.

Au lieu de la surépaisseur 50 le plateau 11 peut présenter, venu de moulage, un manchon d'orientation axiale doté de rainures ou cannelures pour liaison en rotation de la rondelle d'application.

D'une manière générale la surépaisseur 50 ou le manchon peut servir au centrage de la rondelle 44. Dans ce cas la rondelle 44 peut être entraînée que par l'un des axes 6 ou l'un des manchons (ou tubes) 37.

Les axes 6 peuvent être creux en étant implantés dans les trous 22. Les outils de vissage des vis 31 traversent alors les axes 6. La rondelle 44 peut alors, par moulage, avoir la forme voulue pour engrener avec le ou les axes 6, ou le ou les manchons 37.

Pour la position de repos du volant amortisseur les axes 6 et 7 sont radialement alignés. Il n'est pas toujours ainsi, les axes 6 pouvant être légèrement décalés circonférentiellement par rapport aux axes 7 pour ladite position de repos. Dans tous les cas les organes élastiques 34 interviennent globalement radialement entre les deux masses.

## Revendications

1. Volant amortisseur, notamment pour véhicules automobiles, comportant deux masses coaxiales (1,2) montées mobiles l'une par rapport à l'autre à l'encontre, d'une part, des moyens élastiques (3) comportant au moins un organe élastique (34) intervenant globalement radialement entre lesdites masses et monté à articulation sur l'une et l'autre de celles-ci, et, d'autre part, des moyens de frottement à action axiale (4), dans lequel l'une (1) des masses (1,2), dite première masse, est propre à être calée en rotation sur un arbre menant, tandis que l'autre (2) des masses (1,2) constitue le plateau de réaction d'un embrayage, et dans lequel les moyens élastiques (3) sont montés à articulation à la périphérie externe de la première masse (1) à l'aide de premiers moyens d'articulation (7) et à articulation à la périphérie interne de la seconde masse (2) à l'aide de seconds moyens d'articulation (6), lesdits moyens de frottement (4) s'étendant en majeure partie radialement au-delà des seconds moyens d'articulation (6), ces moyens de frottement (4) étant implantés axialement entre ladite première masse et lesdits moyens élastiques (3) et présentant au moins une rondelle de frottement (44), d'une part, propre à être entraînée en rotation, éventuellement après rattrapage d'un jeu, par la deuxième masse (2) et, d'autre part, intercalée entre deux surfaces de frottement appartenant à la première masse (1).

2. Volant selon la revendication 1, caractérisé en ce que la rondelle de frottement (44) est propre à être serrée axialement entre une face de frottement solidaire de la première masse (1) en étant tournée vers la seconde masse (2) et une rondelle d'application (43) calée en rotation sur la première masse (1).

3. Volant selon la revendication 2, caractérisé en ce que la rondelle d'application (43) est soumise à l'action d'une rondelle élastique à action axiale (42) prenant appui sur un épaulement (41) solidaire de la première masse (1) en sorte qu'il est formé une boucle d'action et de réaction au sein de la première masse (1).

4. Volant selon la revendication 3, caractérisé en ce que ledit épaulement (41) consiste en une rondelle solidaire de la première masse (1).

5. Volant selon l'une quelconque des revendications précédentes, dans lequel les moyens élastiques (3) sont montés à articulation sur la seconde masse (2) à l'aide d'un axe (6) porté par la seconde masse (2), caractérisé en ce que la rondelle de frottement (44) présente à sa périphérie interne une surépaisseur (46) propre à engrener, éventuellement après rattrapage d'un jeu, avec un prolongement dudit axe d'articulation pénétrant dans ladite surépaisseur (46).

6. Volant selon l'une quelconque des revendications précédentes, caractérisé en ce que les seconds moyens d'articulation (6) consistent en des axes (6) présentant une portion d'emmanchement dans la masse (2) de taille supérieure à leur extrémité libre (61) formant axe d'articulation pour les moyens élastiques (3).

7. Volant selon la revendication 6, caractérisé en ce que les axes (6) sont implantés radialement au-dessus d'ouvertures (22) prévues dans la deuxième masse (2) pour le passage d'outils de vissage des vis de fixation (31) destinés à la fixation du volant amortisseur sur son arbre menant.

8. Volant selon la revendication 7, dans lequel les deux masses (1,2) sont montées mobiles l'une par rapport à l'autre, à l'aide d'un palier (5) interposé radialement entre un moyeu (12) solidaire de la première masse (1) et un alésage interne de la seconde masse (2), caractérisé en ce que le palier (5) est implanté radialement en dessous desdites ouvertures (22) et en ce que les moyens de frottement (4) s'étendent radialement au-dessus des vis de fixation (31).

9. Volant selon l'une quelconque des revendications précédentes, caractérisé en ce que les moyens de frottement (4) sont implantés à la faveur d'une surépaisseur (50) de la première masse (1), ladite masse présentant à sa périphérie interne une portion (14) d'épaisseur réduite.

10. Volant selon l'une quelconque des revendications précédentes, caractérisé en ce que les moyens de frottement sont implantés à la faveur d'un manchon d'orientation axiale solidaire de la première masse.

11. Volant amortisseur selon l'une quelconque des revendications précédant ; caractérisé en ce que les moyens élastiques comportent des organes élastiques (34) montés dans des cassettes articulées, en sorte que c'est par l'intermédiaire des cassettes que les organes élastiques sont montés à articulation sur l'une et l'autre des masses (1,2).

12. Volant amortisseur selon la revendication 11, caractérisé en ce que les cassettes comportant deux éléments en relation de cylindre-piston.

## Patentansprüche

1. Dämpfungsschwungrad, insbesondere für Kraftfahrzeuge, umfassend zwei koaxiale Massen (1, 2), die im Verhältnis zueinander beweglich einerseits entgegen elastischen Mitteln (3), die wenigstens ein elastisches Organ (34) umfassen, das insgesamt radial zwischen den besagten Massen zum Einsatz kommt und gelenkig an der einen und der anderen von ihnen gelagert ist, und andererseits entgegen axial wirksamen Reibungsmitteln (4) gelagert sind, wobei eine (1) der Massen (1, 2), die als erste Masse bezeichnet wird, drehfest an einer treibenden Welle angebracht werden kann, während die andere (2) der Massen (1, 2) die Gegenanpreßplatte einer Kupplung bildet, und wobei die elastischen Mittel (3) gelenkig am äußeren Umfang der ersten Masse (1) anhand von ersten Anlenkmitteln (7) und gelenkig am inneren Umfang der zweiten Masse (2) anhand von zweiten Anlenkmitteln (6) gelagert sind, wobei sich die besagten Reibungsmittel (4) zum größten Teil radial jenseits der zweiten Anlenkmittel (6) erstrecken, wobei die Reibungsmittel (4) axial zwischen der besagten ersten Masse und den besagten elastischen Mitteln (3) angeordnet sind und wobei die Reibungsmittel (4) wenigstens eine Reibscheibe (44) aufweisen, die einerseits, gegebenenfalls nach der Beseitigung eines Spiels, durch die zweite Masse (2) drehend mitgenommen werden kann und die andererseits zwischen zwei zu der ersten Masse (1) gehörenden Reibflächen eingefügt ist.

2. Schwungrad nach Anspruch 1, **dadurch gekennzeichnet,** daß die Reibscheibe (44) axial zwischen einer fest mit der ersten Masse (1) verbundenen und zur zweiten Masse (2) gerichteten Reibfläche und einer drehfest an der ersten Masse (1) angebrachten Anpreßscheibe (43) eingespannt werden kann.

3. Schwungrad nach Anspruch 2, **dadurch gekennzeichnet,** daß die Anpreßscheibe (43) der Wirkung einer axial wirksamen Federscheibe (42) ausgesetzt ist, die an einer fest mit der ersten Masse (1) verbundenen Schulter (41) zur Auflage kommt, so daß ein Wirkungs- und Rückwirkungskreis im Innern der ersten Masse (1) gebildet wird.

4. Schwungrad nach Anspruch 3, **dadurch gekennzeichnet,** daß die besagte Schulter (41) aus einer fest mit der ersten Masse (1) verbundenen Scheibe besteht.

5. Schwungrad nach Anspruch 1, bei dem die elastischen Mittel (3) gelenkig an der zweiten Masse (2) anhand einer an der zweiten Masse (2) angebrachten Achse (6) gelagert sind, **dadurch gekenn-zeichnet,** daß die Reibscheibe (44) an ihrem inneren Umfang eine Erhebung (46) aufweist, die gegebenenfalls nach der Beseitigung eines Spiels, mit einer Verlängerung der besagten Gelenkachse in Eingriff kommen kann, die in die besagte Erhebung (46) eindringt.

6. Schwungrad nach Anspruch 1, **dadurch gekennzeichnet,** daß die zweiten Anlenkmittel (6) aus Achsen (6) bestehen, die einem Abschnitt zum Einstecken in die Masse (2) aufweisen, der größer als ihr freies Ende (61) ist, das eine Gelenkachse für die elastischen Mittel (3) bildet.

7. Schwungrad nach Anspruch 6, **dadurch gekennzeichnet,** daß die Achsen (6) radial oberhalb von Öffnungen (22) angeordnet sind, die in der zweiten Masse (2) für den Durchgang von Werkzeugen zum Einschrauben von Befestigungsschraubern (31) zur Befestigung des Dämpfungsschwungrads an seiner treibenden Welle vorgesehen sind.

8. Schwungrad nach Anspruch 7, bei den die zwei Massen (1, 2) im Verhältnis zueinander beweglich anhand eines Lagers (5) gelagert sind, das radial zwischen einer fest mit der ersten Masse (1) verbundenen Nabe (12) und einer inneren Bohrung der zweiten Masse (2) eingefügt ist, **dadurch gekennzeichnet,** daß das Lager (5) radial unterhalb der besagten Öffnungen (22) angeordnet ist und daß sich die Reibungsmittel (4) radial oberhalb der Befestigungsschrauben (31) erstzecken.

9. Schwungrad nach Anspruch 1**, dadurch gekennzeichnet,** daß die Reibungsmittel (4) mittels einer Erhebung (50) der ersten Masse (1) angeordnet sind, wobei die besagte Masse an ihrem inneren Umfang einen Abschnitt (14) mit geringerer Dicke aufweist.

10. Schwungrad nach Anspruch 1, **dadurch gekennzeichnet,** daß die Reibungsmittel mittels einer fest mit der ersten Masse verbundenen, axial ausgerichteten Muffe angeordnet sind.

11. Schwungrad nach einem der vorangehenden Ansprüche, **dadurch gekennzeichnet ,** daß die elastischen Mittel elastische Organe (34) umfassen, die in Gelenkkassetten eingebaut sind, so daß die elastischen Organe über die Kassetten gelenkig an der einen und der anderen der Massen (1, 2) gelagert sind.

12. Schwungrad nach Anspruch 11,**dadurch gekennzeichnet,** daß die Kassetten zwei Elemente im Verhältnis Zylinder-Kolben umfassen.

## Claims

1. Damping flywheel, notably for motor vehicles, having two coaxial masses (1, 2) mounted so as to be movable with respect to one another counter, firstly, to elastic means (3) having at least one elastic member (34) acting radially overall between the said masses and pivotally mounted on each of the latter and, secondly, axially acting friction means (4), in which one (1) of the masses (1, 2), called the first mass, is suitable for being fixed with respect to rotation to a drive shaft, while the other one (2) of the masses (1, 2) constitutes the reaction plate of a clutch, and in which the elastic means (3) are pivotally mounted at the external periphery of the first mass (1) by means of first pivot means (7) and pivotally at the internal periphery of the second mass (2) by means of second pivot means (6), the said friction means (4) extending for the most part radially beyond the second pivot means (6), the friction means (4) being located axially between the said first mass and the said elastic means (3), and the friction means (4) having at least one friction washer (44) on the one hand suitable for being rotated, if applicable after a clearance has been taken up, by the second mass (2), and on the other hand interposed between two friction surfaces belonging to the first mass (1).

2. Flywheel according to Claim 1, characterised in that the friction washer (44) is suitable for being clamped axially between a friction face fixed to the first mass (1) while facing the second mass (2) and an application washer (43) fixed with respect to rotation to the first mass (1).

3. Flywheel according to Claim 2, characterised in that the application washer (43) is subject to the action of an axially acting elastic washer (42) bearing on a shoulder (41) fixed to the first mass (1) so that an action and reaction loop is formed within the first mass (1).

4. Flywheel according to Claim 3, characterised in that the said shoulder (41) consists of a washer fixed to the first mass (1).

5. Flywheel according to Claim 1, in which the elastic means (3) are pivotally mounted on the second mass (2) by means of a pin (6) carried by the second mass (2), characterised in that the friction washer (44) has at its internal periphery an excess thickness (46) suitable for engaging, if applicable after the taking up of a clearance, with an extension of the said pivot pin entering the said excess thickness (46).

6. Flywheel according to Claim 1, characterised in that the second pivot means (6) consist of pins (6) having a portion inserted in the mass (2) larger than their free end (61) forming a pivot pin for the elastic means (3).

7. Flywheel according to Claim 6, characterised in that the pins (6) are located radially above openings (22) provided in the second mass (2) for the passage of tools for screwing fixing screws (31) designed to fix the damping flywheel on its drive shaft.

8. Flywheel according to Claim 7, in which the two masses (1, 2) are mounted so as to be able to move with respect to one another, by means of a bearing (5) interposed radially between a hub (12) fixed to the first mass (1) and an internal bore in the second mass (2), characterised in that the bearing (5) is located radially below the said openings (22) and in that the friction means (4) extend radially above the fixing screws (31).

9. Flywheel according to Claim 1, characterised in that the friction means (4) are located by means of an excess thickness (50) in the first mass (1), the said mass having at its internal periphery a portion (14) of reduced thickness.

10. Flywheel according to Claim 1, characterised in that the friction means are located by means of an axially oriented sleeve fixed to the first mass.

11. Damping flywheel according to any one of the preceding claims, characterised in that the resilient hubs have resilient members (34) mounted in articulated cases, so that it is by means of the cases that the resilient members are mounted for articulation on each of the masses (1, 2).

12. Damping flywheel according to Claim 11, characterised in that the cases have two elements in cylinder/piston relationship.
